# EUROPÄISCHE PATENTSCHRIFT

(11) **EP 1 450 055 B1**
(45) Veröffentlichungstag und Bekanntmachung des Hinweises auf die Patenterteilung: **11.11.2015**
(21) Anmeldenummer: 04004090.9
(22) Anmeldetag: 23.02.2004
(51) Int. Cl.: F16B 37/14, F16B 39/284, B21K 1/70, B23K 11/30, B23K 11/00

(54) **Hutmuttern aus Metall**
Cap nut made of metal
Ecrou borgne en métal

(30) Priorität: 24.02.2003 DE 10307786
(43) Veröffentlichungstag der Anmeldung: 25.08.2004
(73) Patentinhaber: NEDSCHROEF PLETTENBERG GmbH, 58840 Plettenberg (DE)
(72) Erfinder: Kirschniok, Joachim, 44369 Dortmund (DE); Kob, Peter-Wilm, 58849 Herscheid (DE)
(74) Vertreter: Patentanwälte Dörner & Kötter PartG mbB

(56) Entgegenhaltungen:
- DE-A- 2 607 701
- FR-A- 1 283 768
- FR-A- 2 395 807
- JP-A- 62 215 115
- US-A- 4 744 119
- US-A- 4 784 555
- PATENT ABSTRACTS OF JAPAN Bd. 014, Nr. 481 (M-1037), 19. Oktober 1990 (1990-10-19) -& JP 02 195009 A (FUSE RASHI:KK;OTHERS: 02), 1. August 1990 (1990-08-01)

## Beschreibung

### I. Anwendungsgebiet

Die Erfindung betrifft Hutmuttern aus Metall, bei denen sowohl der eigentliche Muttern-Korpus, als auch der Hut aus Metall bestehen.

### II. Technischer Hintergrund

Sofern an derartigen Hutmuttern keine weiteren Besonderheiten bestehen müssen, wurden solche Ganzmetall-Hutmuttern in der Vergangenheit entweder aus einem Stück hergestellt, beispielsweise mittels Kaltumform-Verfahren, oder in letzter Zeit auch aus zwei Teilen, nämlich dem Hut einerseits und dem restlichen Muttern-Korpus andererseits, hergestellt, wiederum vorzugsweise mittels Kaltumform-Verfahren, und anschließend miteinander verschweißt.

Dies ist technisch trotz des zusätzlichen Arbeitsschrittes einfacher und damit kostengünstiger, da bei den Kaltumform-Verfahren für die Einzelteile keine komplizierten Hinterschnitte etc. geformt werden müssen.

Bei speziellen Hutmuttern wurde dieses Verfahren jedoch bisher nicht angewandt, weil dem vermeintlich spezifische Hindernisse entgegenstanden:

Eine erste Spezialform sind so genannte vorverformte Ganzmetall-Muttern, auch in der Form als Hutmuttern:

Die Besonderheit besteht darin, dass diese Muttern selbstsichernd sind, indem das Gewinde der Mutter nach dem Herstellen, wobei es einen kreisförmigen Querschnitt erhält, durch Einprägungen am Mutternkörper von außen, also entweder von radial außen oder von axial oben bezüglich der Achsrichtung betrachtet, das Innengewinde in der Mutter bereichsweise nach innen gedrückt wird. Beim Einschrauben eines im Querschnitt runden Gewindebolzens liegt die nach innen gedrückte Stelle des Mutterngewindes also mit einer gewünschten definierten Vorspannung, erzielt durch die Elastizität des Mutternkörpers, an dem Gewindebolzen an, so dass sich die Mutter nicht lösen kann.

Bei derartigen verformten Ganzmetall-Hutmuttern wurde die zweiteilige Herstellung bisher nicht durchgeführt, da befürchtet worden war, dass der nach der Verformung aufgeschweißte Hut entweder aufgrund der Temperaturwirkung die Vorspannung des Mutternkörpers schwinden lässt oder der vor dem Verschweißen nicht in die gleiche Richtung vorverformte Hut das Zurückbiegen des Mutternkörpers beim Einschrauben eines Gewindebolzens so beeinflusst, dass eine definierte Vorspannung und damit Sicherungskraft nicht mehr berechnet werden kann.

Eine zweite Spezialform sind Muttern mit einer unverlierbar, jedoch drehbar gegenüber dem Mutternkörper angeordneten Unterlegscheibe, sog. Kombi-Muttern. Auch diese Kombi-Muttern in der Bauform als Hutmuttern wurden bisher nicht zweiteilig mittels Verschweißen hergestellt, da man der Meinung war, dass das Aufschweißen des Hutes die Drehbarkeit der Verbindung zwischen Mutter und Unterlegscheibe, die ja beide aus Metall bestehen, behindert, insbesondere ein Verklemmen, Verkleben oder Verschweißen zwischen Unterlegscheibe und Muttern-Korpus auftreten kann, vor allem wenn das Schweißen mittels Lichtbogen-Schweißen durchgeführt wird.

Eine dritte Spezialform sind sog. Schweißmuttern, also Muttern, bei denen über die Pressfläche, mit der die Mutter an einem Anlageteil anliegen soll, eine vorstehende Erhebung, meist ringförmig um die Gewindebohrung herum, aufweist, wobei die Pressfläche dieser Schrauben meist gegenüber dem eigentlichen Muttern-Korpus vergrößert ist.

Diese Schweißmuttem werden anschließend an einem Tragobjekt, beispielsweise einem Blech, durch Verschweißen befestigt, indem die Schweißmutter mittels Reib-Schweißen oder Lichtbogen-Schweißen am Tragobjekt befestigt wird, wobei der ringförmige Wulst bzw. die ringförmige Erhebung mit ihrer zunächst kleinen Kontaktfläche gegenüber dem Blech eine Ausbildung eines starken, konzentrierten Lichtbogens bzw. einer hohen Reibung und damit guten Verschweißung ermöglicht.

Darüber hinaus ist es aus der DE 2607701 bekannt, verformte Ganzmetall-Hutmuttern herzustellen durch separate Herstellung von Hutmutter und Korpus und Verschweißen der beiden, jedoch erfolgt dabei die Verformung durch Radialverformung nach Innen eines vom Muttern-Korpus aus in die Kappe hinein vorstehenden Halses.

Weiterhin zeigt die JP 02 1195009 A eine aus Korpus und Hut verschweißte Hutmutter. Dabei sind in der dem Hut zugewandten Stirnfläche des Korpus Einkerbungen vorhanden, die auch nach dem Aufschweißen des Hutes Durchgangsöffnungen in das Innere der Hutmutter offen lassen, um eine nachträgliche Beschichtung der Hutmutter auch auf deren Innenflächen zu erleichtern.

Das Erzielen einer Sicherungskraft, insbesondere durch die Eigenstabilität des Mutternhutes, ist dieser Schrift nicht zu entnehmen.

### III. Darstellung der Erfindung

### a) Technische Aufgabe

Es ist daher die Aufgabe gemäß der Erfindung, eine kostengünstige und technisch einfache Herstellungsmöglichkeit bzw. eine entsprechend einfach gestaltete Ganzmetall-Hutmutter zu schaffen, mit der auch die Spezialformen von Muttern herstellbar sind.

### b) Lösung der Aufgabe

Diese Aufgabe wird durch die Merkmale des Anspruches 1 und 13 gelöst. Vorteilhafte Ausführungsformen ergeben sich aus den Unteransprüchen.

Durch die Herstellung von Muttern-Korpus einerseits und Muttern-Hutes andererseits jeweils aus Metall als Einzelteile insbesondere im Kaltumformverfahren gestaltet sich deren Herstellung einfacher und kostengünstiger, da vor allem die bei einstückiger Herstellung mittels Kaltumformen problematische Erstellung des verbreiterten Innenraumes im Muttern-Hut gegenüber dem Durchmesser des Gewindes wegfällt und die Beschränkung auf nicht durchlaufende Gewindebohrer.

Das anschließende Verschweißen stellt zwar demgegenüber einen zusätzlichen Arbeitsgang dar, der jedoch hinsichtlich des technischen Schwierigkeitsgrades und auch der Kosten diesen Vorteil nicht vollständig aufzehrt.

Durch die Verformung des Innengewindes, also der Gewindebohrung, des Korpus erhält das Innengewinde die gewünschte Vorspannung und damit Sicherung gegen unbeabsichtigtes Lösen der Mutter im Verschraubungs-Einsatz.

Durch Verwendung eines Muttern-Hutes, der eine definierte Stabilität gegen Verformung in Querrichtung aufgrund definierten Materials und definierter Wandstärke und übriger Abmessungen aufweist, wird die Vorspannung der fertiggestellten Ganzmetall-Hutmutter beim Einschrauben eines runden Gewindebolzens gegen den Gewindebolzen zwar durch die Stabilität des Mutternhutes zusätzlich erhöht, jedoch wird dies berücksichtigt, indem zuvor die Verformung des Muttern-Korpus, und damit dessen Vorspannung alleine, entsprechend niedriger gewählt wird als bei der Herstellung offener Muttern ohne Hut.

Der Hut wird vor dem Aufschweißen vorzugsweise nicht in Querrichtung aus der kreisrunden Querschnittsgestalt heraus verformt.

Die Wandstärke des Hutes beträgt max. 1/5, insbesondere max. 1/8, insbesondere max. 1/10 der geringsten Wandstärke des Muttern-Korpus, also von der Mitte der äußeren Sechseckflanken bis zum Grund des Innengewindes.

Die Dicke der Wandstärke des Hutes wird bei einer Wandstärke von 1 bis 3 mm bis auf +/- 0,10 mm genau eingehalten, insbesondere bei Herstellung des Mutternhutes aus Stahl der Qualität ST70 und besser.

Um zu vermeiden, dass vor dem Verschweißen der beiden Teile vorhandene Erhebungen auf der Oberseite des Muttern-Korpus oder auf der Stirnfläche des Hutes zu einer Verformung eines der beiden Einzelteile und damit zur Veränderung des Widerstandes eines der beiden Einzelteile auch in Querrichtung führen, kann insbesondere die Stirnfläche des Hutes und/oder die Oberseite des Muttern-Korpus plan bearbeitet werden, sei es durch spanende Bearbeitung oder durch einen zusätzlichen Kaltumform-Vorgang.

Die andere Möglichkeit - vor allem wenn die Sicherungskraft der verformten fertiggestellten Mutter nur in groben Grenzen eingehalten werden muss - besteht darin, ohne zusätzliche Egalisierung allein durch starkes Aufeinanderpressen der beiden Teile beim Verschweißen diese Unebenheiten auszugleichen.

Bei Herstellung derartiger Muttern mit unverlierbarer, jedoch gegenüber dem Korpus drehbarer, Unterlegscheibe, wird - vorzugsweise nach dem Herstellen des Korpus einschließlich seiner Querverformung - die zunächst separat hergestellte Unterlegscheibe über den in Richtung Pressfläche vorstehenden Schaft des Korpus gefädelt und der Schaft nach außen umgebördelt zur unverlierbaren, also in Längsrichtung nicht lösbaren, in Umfangsrichtung jedoch drehbaren, Verbindung zwischen Unterlegscheibe und Muttern-Korpus.

Beim anschließenden Verschweißen, insbesondere Lichtbogen-Schweißen, zwischen Mutter und Korpus greifen die stromzuführenden Kontaktelemente vorzugsweise bei der Korpuseinheit am Muttern-Korpus und nicht an der Unterlegscheibe an, so dass der Stromfluß von der Korpuseinheit in den Hut oder umgekehrt nicht über die Kontaktstelle zwischen Unterlegscheibe und Korpus fließen muß. Zur mechanischen Abstützung sitzt die Korpuseinheit vorzugsweise mit ihrem nach außen umgebördelten Rand des Schaftteiles auf einem vorzugsweise kegelförmigen Unterstützungselement auf, während der Hut stirnseitig oben z. B. von einem pfannenförmigen Stützelement abgestützt wird.

Diese Probleme treten beim Herstellen sog. Schweißmuttern, also Muttern mit einer vorstehenden Erhebung auf der Preßfläche, nicht auf, so dass hier das Angreifen der Kontaktelemente beim Verschweißen zwischen Hut und Korpus an jeder beliebigen Stelle, vorzugsweise auch bei dem Korpus von der Preßfläche her, erfolgen kann.

Beim Verschweißen der fertig gestellten Schweißmutter gegenüber einem Aufnahmeteil wird die Hutmutter von den stromzuführenden Greifern vorzugsweise im Bereich des Muttern-Korpus ergriffen, wobei zur Abstützung in Längsrichtung und zum Aufbringen der Längsanpresskraft die über den Außenumfang des Hutes vorstehende Oberseite des Muttern-Korpus vorzugsweise verwendet wird aufgrund des größeren Abstandes zur Schweißfläche, oder der Absatz zwischen dem Muttern-Korpus und der demgegenüber vergrößerten Preßfläche.

Sofern die Einhaltung der notwendigen Toleranzen bei der Herstellung des Hutes gesichert ist, kann der Hut statt im Kaltumform-Prozess auch mittels Gießen hergestellt werden.

Der Hut steht in dem mit dem Korpus verschweißten Endzustand seitlich nicht über den Korpus, auch nicht über dessen zusammengedrückte Flanken, vor. Dagegen ist der Innendurchmesser des Hutes vorzugsweise größer als der Außendurchmesser des Innengewindes des Muttern-Korpus, so dass ein in das Innengewinde eingeschraubter Gewindebolzen in den Hut hinein vorstehen kann.

Hut und Korpus bestehen vorzugsweise aus dem gleichen Material, insbesondere Stahl oder Leichtmetall, dabei insbesondere aus Aluminium.

Eine weitere Möglichkeit besteht darin, den Hut der Mutter am Korpus zu befestigen im Zuge der Querverformung des Muttern-Korpus:

Die eine Möglichkeit besteht darin, dass die Pressbacken beim Querverformen des Muttern-Korpus gleichzeitig die Kontakt- und Greifarme für die Stromzuführung zum Verschweißen mit dem Hut sind, und beides - also Querverformung und Verschweißung - gleichzeitig geschieht. Da die Querverformung schlagartig durchgeführt wird, das Verschweißen jedoch aufgrund des Aufheizens der Materialien eine geringe Zeit erfordert, wird dennoch die Querverformung des Muttern-Korpus eine sehr geringfügige, für den Betrachter kaum wahrnehmbare, Zeitspanne vor dem Aufschweißen des Hutes erfolgen.

Der Vorteil liegt darin, dass hinsichtlich Handling, Positionierung der Einzelteile etc. nur ein einziger Arbeitsgang benötigt wird.

Die andere Möglichkeit besteht darin, die Querverformung des Muttern-Korpus selbst unmittelbar als Befestigungsmethode für den Hut zu verwenden. Dies ist beispielsweise möglich, indem in der Oberseite des Korpus, beispielsweise zum freien Innenraum hin, eine ringförmige Aussparung zum Einsetzen der Stirnseite des Hutes vorhanden ist und in diese Aussparung der Hut vor der Verformung des Gewindes des Korpus eingesetzt und zusammen mit diesem verformt und damit kraftschlüssig und auch ausreichend dicht am Muttern-Korpus befestigt wird.

### c) Ausführungsbeispiele

Eine Ausführungsform gemäß der Erfindung ist im Folgenden anhand der Figuren beispielhaft näher beschrieben. Es zeigen:
- Fig. 1:: den erfindungsgemäßen Herstellungsablauf bei einer Ganzmetall-Hutmutter mit vorverformten Gewinde,
- Fig. 2:: den analogen Herstellungsablauf bei einer Ganzmetall-Hutmutter mit unverlierbarer Unterlegscheibe,
- Fig. 3:: den analogen Herstellungsablauf bei einer Ganzmetall-Hutmutter als Schweißmutter,
- Fig. 4:: eine weitere Art der Befestigung des Hutes und
- Fig. 5:: eine dritte Art der Befestigung des Hutes.

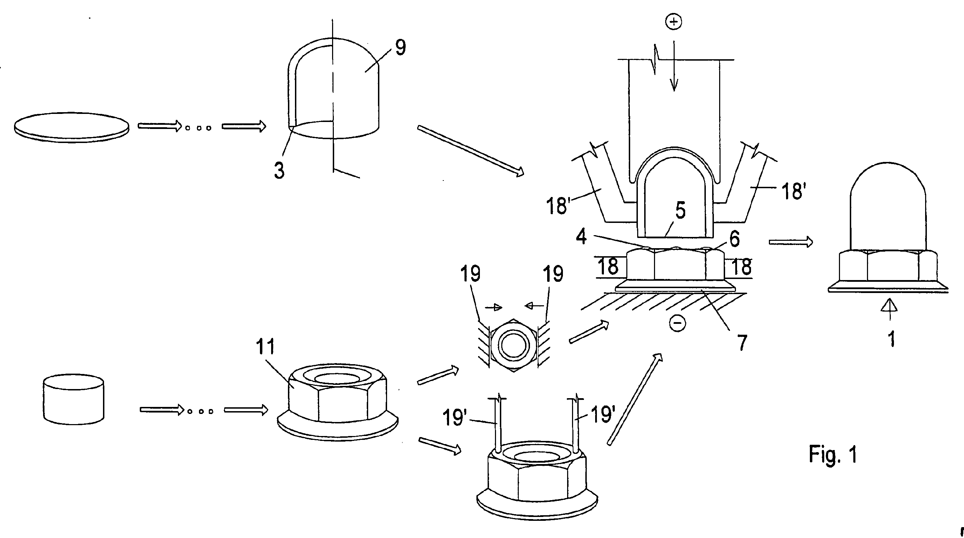

Fig. 1 zeigt zunächst die separate Herstellung des Hutes 9, der in der Regel durch Ausstanzen eines kreisförmigen Ausgangsteiles aus einem ebenen Blech und anschließendes Kaltverformen (Tiefziehen) zu dem gewünschten kappenförmigen Hut mit definierter Wandstärke geschieht.

Der Muttern-Korpus wird in der Regel ebenfalls durch Kaltumformen eines abgelängten Stückes eines Rundmaterials zu einem Muttern-Rohling und anschließendes Schneiden des Innengewindes konventionell hergestellt.

Anschließend erfolgt die Vorverformung des Innengewindes, indem Preßbacken 19 entweder quer zur Gewinde-Längsrichtung 10, vorzugsweise an zwei einander gegenüberliegenden oder auch mehreren äußeren Flanken des Außenumfanges des Korpus 11, vorzugsweise in dessen oberen Bereich, angreifen und die Mutter etwas zusammenpressen, wodurch die Gewindebohrung 12 von der ursprünglich runden in eine leicht ovale Form verformt wird.

Ein ähnlicher Effekt wird erzielt, wenn statt dessen Preßbacken 19' in Gewinde-Längsrichtung 10 in die Oberseite 6 des Korpus 11 gepresst werden und das dadurch verdrängte Material teilweise ebenfalls das Innengewinde nach Innen verformt.

Anschließend wird der so verformte Korpus 11 einerseits und der Hut 9 andererseits durch Greifarme 18, 18' mechanisch ergriffen und gleichzeitig elektrisch kontaktiert, indem diese Greifarme die Stromzuführungen zu den beiden Einzelteilen darstellen, die durch ausreichendes Annähern aneinander mit der Stirnfläche 3 des Hutes 9 gegen die Oberseite 6 des Korpus 11 mittels Lichtbogen miteinander verschweißt werden. Erhebungen 4 auf der Oberseite 6 des Korpus 11, wie sie durch die Gewindeverformung auftreten können, werden aufgrund der Erwärmung beim Verschweißen egalisiert, insbesondere finden sie Aufnahme in der erweichten Stirnfläche 3 des Hutes 9.

Zum Aufbringen einer ausreichenden Anpresskraft in Längsrichtung 10 gegeneinander kann zusätzlich oder anstatt der Greifarme 18, 18' jedes der Teile durch ein auf seiner Rückseite ansetzendes Abstützelement, welches auf der Seite des Hutes 9 vorzugsweise pfannenförmig entsprechend der Außenkontur des Hutes 9 ausgebildet ist, unterstützt, aber auch hierdurch gleichzeitig elektrisch kontaktiert werden.

Auf diese Art und Weise wird eine Ganzmetall-Hutmutter 1 hergestellt, deren Hut 9 mit dem Korpus 11 umlaufend und flüssigkeitsdicht, insbesondere auch gasdicht, verbunden ist, und trotz Herstellung aus einem einzigen Material eine Sicherung gegen unbeabsichtigtes Lösen der Mutter aufweist.

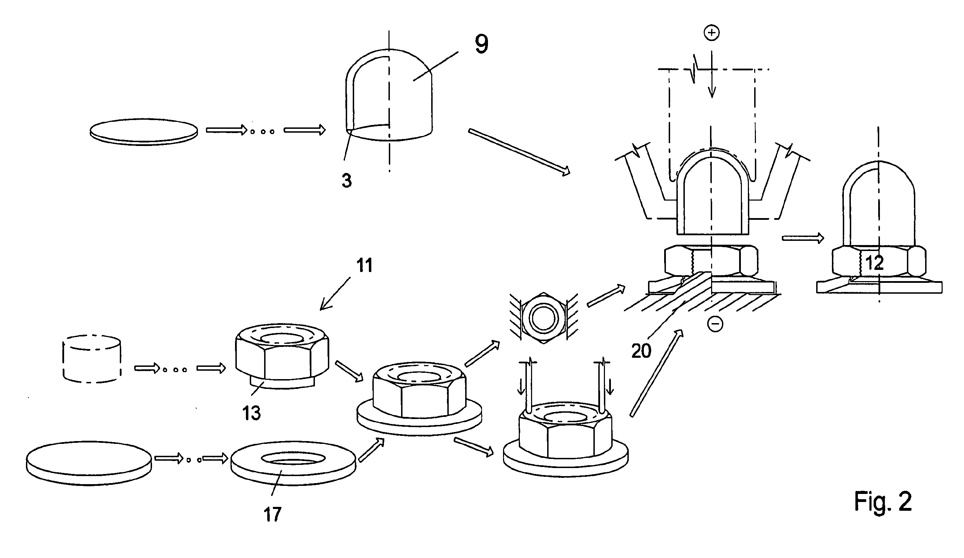

Fig. 2 unterscheidet sich von der Vorgehensweise der Fig. 1 dadurch, dass die Korpus-Einheit bereits aus zwei Teilen besteht, nämlich dem Korpus 11 und der unverlierbar, jedoch drehbar daran befestigten Unterlegscheibe 17.

Zu diesem Zweck weist der Korpus 11 einen in Richtung Preßfläche 7 vorstehenden Schaftteil 13 auf, über den die als Stanzteil hergestellte Unterlegscheibe 17 geschoben und durch Umbördeln des freien Randes des Schaftteiles 13 längsfest, jedoch drehbar gehalten wird.

Um diese drehbare Verbindung nicht ungewollt beim anschließenden Fixieren des Hutes 9 auf dem Korpus 11 zu verfestigen, greifen die mechanischen Greifarme und/oder die elektrischen Kontaktelemente am Korpus 11 und nicht an der Unterlegscheibe 17 an, wozu die Abstützung des Korpus 11 in Längsrichtung vorzugsweise über ein kegelförmiges Abstützelement 20 erfolgt, welches nur an dem Schaftteil 13, nicht jedoch an der Unterlegscheibe 17 angreift.

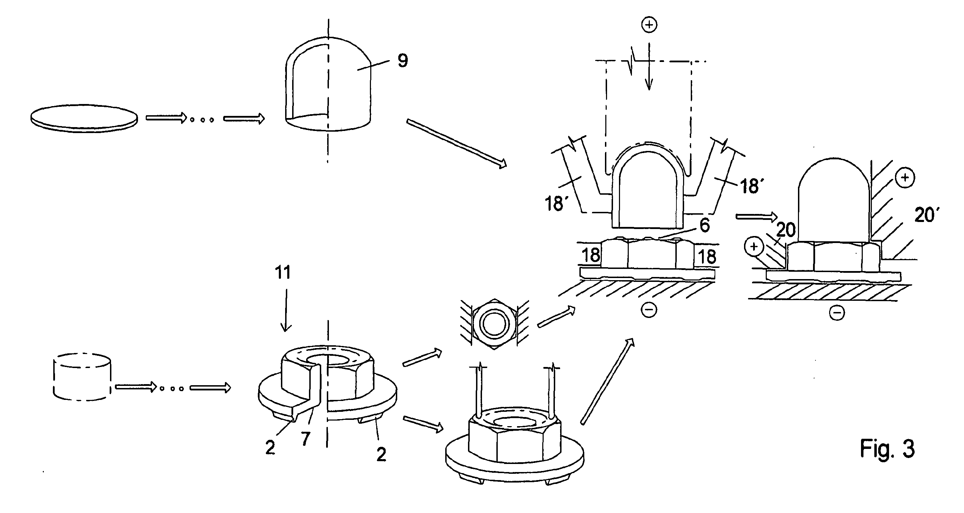

Fig. 3 zeigt die Herstellung einer Schweißmutter, die sich von der Mutternform der Fig. 1 dadurch unterscheidet, dass der Korpus 11 auf seiner Preßfläche 7 eine - in der Regel konzentrisch ringförmig umlaufende - Schweißerhebung 2 aufweist und zusätzlich vorzugsweise die Preßfläche 7 flanschartig gegenüber der Unterseite des normalen Korpus verbreitert ist.

Auch hier erfolgt die Herstellung des Korpus 11 wie anhand der Fig. 1 beschrieben durch Umformen aus einem in der Regel zylindrischen Ausgangsteil zu einem Mutternrohling, in dessen Innendurchgangsöffnung zuletzt das Innengewinde geschnitten, gerollt oder auf andere Art und Weise eingebracht wird.

Da Korpuseinheit und Huteinheit jeweils in sich einstückig ausgebildet sind, besteht das Problem der elektrischen Kontaktstelle wie bei der separaten Unterlegscheibe nicht.

Allerdings muss zum späteren Aufbringen der Schweißmutter auf einem Aufnahmeteil, beispielsweise einem Blech, vor allem wenn das Aufschweißen mittels Reibschweißen geschieht, eine ausreichende Abstützung der Schweißmutter in Längsrichtung 10 möglich sein.

Dies kann - wie Fig. 3 zeigt - erfolgen durch Ansatz eines entsprechenden Abstützteiles 20 am Absatz zwischen verbreitertem Flansch und Außensechskant der Mutter. Vorzugsweise - wegen des vergrößerten Abstandes zur Schweißstelle - wird jedoch die Schweißmutter so gestaltet, dass der Hut 9 einen soviel kleineren Außendurchmesser als der Durchmesser der Oberseite 6 des Korpus 11 hat, dass an dem so entstehenden Absatz zwischen Hut 9 und Korpus 11 ein entsprechendes Abstützelement 20' - vorzugsweise wiederum umlaufend in Form einer Steck-Nuss - die Hutmutter abstützen und gleichzeitig elektrisch kontaktieren kann für das Verschweißen am Untergrund.

Bei den Fig. 1 bis 3 war das Verbinden des Hutes 9 am Korpus 11 durch stumpfes Aufsetzen der Stirnfläche 3 des Hutes 9 auf der Oberseite 6 des Korpus 11 und Lichtbogen- bzw. Widerstandsverschweißung der beiden Teile in dieser Position dargestellt. Wie ersichtlich ist dabei der Innendurchmesser des Hutes 9 größer als der Außendurchmesser des Innengewindes im Korpus 11 und am Außenumfang steht der Hut 9 an keiner Stelle über die Flanken des Außen-Sechskantes des Korpus 11 vor, insbesondere auch nicht in dessen nach Innen verformten Bereichen.

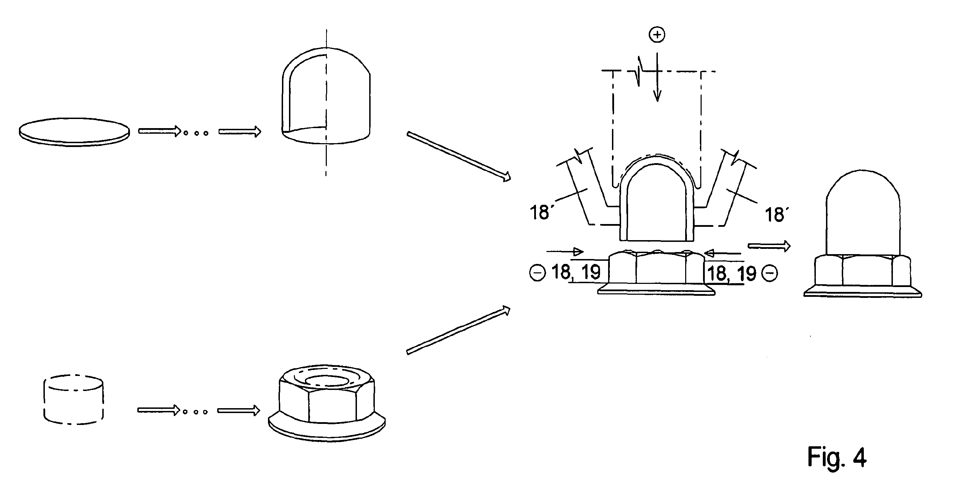

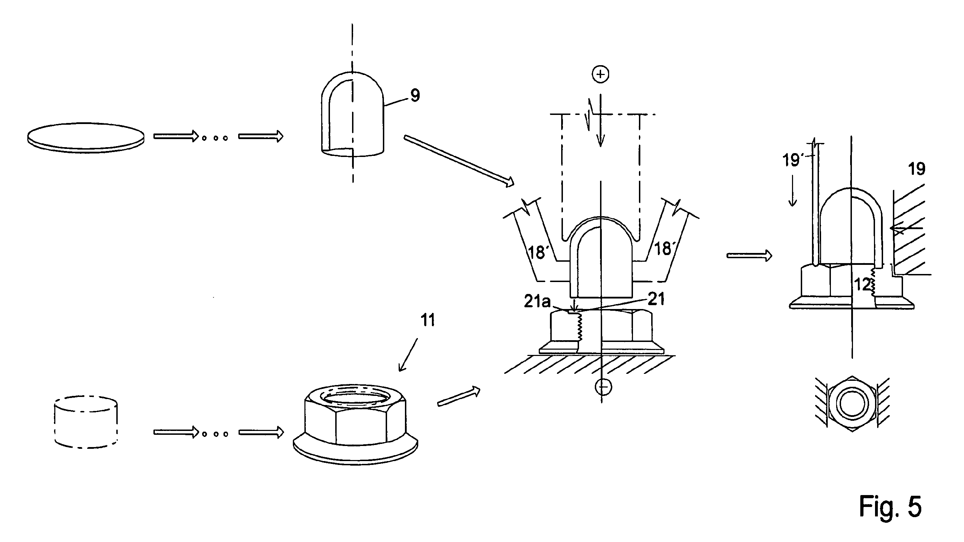

Fig. 4 und 5 zeigen eine demgegenüber andere Befestigungsart des Hutes 9:

Gemäß Fig. 4 werden die Gewindeverformung des Korpus 11 und die Verschweißung zwischen Hut 9 und Korpus 11 in einem Arbeitsgang durchgeführt:

Die Preßbacken 19 zum Querverformen des Korpus 11 sind gleichzeitig die Greifarme 18 und elektrischen Kontaktelemente zum Einleiten von Strom in den Korpus, während andere Kontaktelemente den gleichzeitig angenäherten Hut 9 mit dem anderen Pol des Stromkreises verbinden.

Obwohl Verschweißung und Gewindeverformung des Korpus dabei in einem Arbeitsgang erfolgen, kann dennoch eine zeitliche Reihenfolge wahlweise festgelegt werden durch den Zeitpunkt des Aufschaltens des Schweißstromes. Vorzugsweise wird der Zeitpunkt des Aufschaltens des Schweißstromes so gewählt, dass die Verschweißung erst nach der - in der Regel schlagartig durchgeführten - Querverformung des Korpus erfolgt. Dies kann bedeuten, dass die Stromaufschaltung zeitgleich mit der schlagartigen Verformung oder - um die Sicherheit der Kontaktierung nicht zu gefährden - zeitlich unmittelbar danach geschieht.

Hierfür muss die mechanische Kontaktzeit der Preßbacken 19 am Korpus 11 ausreichend lang sein, um eine ausreichende Aufheizzeit für das Material zum Verschweißen sicherzustellen, vorzugsweise zwischen 0,1 s und 0,8 s. Deshalb wird der Korpus von den Preßbacken über diesen Zeitraum mechanisch kontaktiert gehalten, also über einen längeren Zeitraum, als dies für das nur schlagartig erfolgende mechanische Verformen notwendig wäre.

Eine andere Möglichkeit besteht darin, die Stromaufschaltung vor der mechanischen Verformung zu beginnen, und die beim Verschweißen auftretende Erwärmung der beiden Einzelteile dafür zu nutzen, dass für die erst nach Beginn der Erwärmung stattfindende mechanische Verformung dann ein geringerer Kraftaufwand benötigt wird.

Fig. 5 zeigt eine Möglichkeit der Verbindung von Hut 9 und Korpus 11 ohne Verschweißen:

Dabei wird in der Oberseite 16 des Korpus 11 eine ringförmig umlaufende, insbesondere konzentrisch angeordnete, Ausnehmung 21 angeordnet, in die der Hut 11 mit seiner Oberseite 6 paßt. Vorzugsweise ist die Ausnehmung 21 dabei nicht nur zur Oberseite 6 des Korpus 11 hin offen, sondern auch zur Gewindebohrung 12 hin. Dabei ist die radiale Breite der Ausnehmung 21 in diesem Fall natürlich größer als die Wandstärke des Hutes 9, um sicherzustellen, dass - auch nach der Verbindung der beiden Teile - ein durch die Gewindebohrung 12 durchgeschraubter Gewindebolzen in den Hut eintauchen kann.

Durch das anschließende Verformen des Innengewindes durch radial anpressende Preßbacken 19 oder auch durch axial einpressende Preßbacken 19' wird die nach Innen gerichtete, in Längsrichtung 10 verlaufende Flanke 21a der Ausnehmung 21 gegen den Außenumfang des Hutes 9 gepresst und dieser kraftschlüssig gehalten, natürlich nur an den Umfangsbereichen, an denen die Verformung erfolgt.

Durch Schrägstellen der Flanke 21a und Ausbildung einer Nase dringt diese Nase zusätzlich auch formschlüssig in den Außenumfang des Hutes 9 etwas ein, was die Sicherheit der Verbindung erhöht.

Bei dieser Verbindungsart ist der Hut 9 nicht gasdicht, je nach Wahl der Toleranzen für die Einzelteile jedoch eventuell flüssigkeitsdicht, zumindest ausreichend für ein Überlackieren der so hergestellten Hutmutter, ohne dass dabei Lack zwischen Hut 9 und Korpus 11 hindurch in den Bereich der Gewindebohrung 12 eintritt.

### BEZUGSZEICHENLISTE

- 1: Hutmutter
- 2: Schweiß-Erhebung
- 3: Stirnfläche
- 4: Erhebungen
- 5: offene Seite
- 6: Oberseite
- 7: Pressfläche
- 8,8': Einpressungen
- 9: Hut
- 10: Gewindelängsrichtung
- 11: Korpus
- 12: Gewindebohrung
- 13: Schaftteil
- 14: Hinterschneidung
- 15: innerer Durchmesser
- 16: Außendurchmesser
- 17: Unterlegscheibe
- 18,18': Greifarme
- 19,19': Pressbacken
- 20: Abstützelement
- 21: Ausnehmung
- 21a: Flanke

## Patentansprüche

1. Verfahren zum Herstellen einer verformten Ganzmetall-Mutter als Ganzmetall-Hutmutter (1), wobei
- zunächst der Muttern-Korpus (11) ohne Hut nach Art einer konventionellen Mutter mit Durchgangs-Gewindebohrung (12) hergestellt wird, einschließlich der Verformung dieses Ganzmetall-Korpus (11), insbesondere durch Einpressungen (8, 8') quer zur Gewindelängsrichtung (10) oder in Gewindelängsrichtung (10) auf der von der Pressfläche (7) abgewandten Oberseite (6) des Korpus (11), und
- separate Herstellung des Mutternhutes (9),
- Aufsetzen des Muttemhutes (9) mit seiner offenen Seite (5) auf die Oberseite (6) des Korpus (11) und
- Verschweißen von Hut (9) und Korpus (11) zur Hutmutter (1), **dadurch gekennzeichnet, dass**
- die Erhöhung der Vorspannung der fertiggestellten Ganzmetall-Hutmutter beim Einschrauben eines runden Gewindebolzens gegen den Gewindebolzen durch die Stabilität des Muttemhutes (9) berücksichtigt wird, indem zuvor die Verformung des Muttern-Korpus (11) entsprechend niedriger gewählt wird als bei der Herstellung offener Muttern ohne Hut, wobei die Sollwandstärke des Hutes (1) 1 mm bis 3 mm +/- 0,10 mm beträgt.

2. Verfahren nach Anspruch 1, **dadurch gekennzeichnet, dass** bei auf der Oberseite (6) des Korpus (11) eingebrachten Verformungen der Hut beim Verschweißen so stark auf die Oberseite (6) gepresst wird, dass vorher auf der Oberseite (6) vorhandene Erhebungen (4) egalisiert werden und/oder eine Gegenverformung in der Stirnfläche (3) des Hutes bewirken.

3. Verfahren nach einem der vorhergehenden Ansprüche, **dadurch gekennzeichnet, dass** der Mutternkorpus (11) ohne Hut erstellt wird, indem eine Unterlegscheibe (17) über das Schaftteil (13) des Korpus (11) geschoben und das Schaftteil (13) formschlüssig, jedoch drehbar, mit der Unterlegscheibe (17) verbunden wird, bevor der Muttemhut aufgeschweißt wird.

4. Verfahren nach einem der vorhergehenden Ansprüche, **dadurch gekennzeichnet, dass** beim Verschweißen des Hutes mit der Restmutter - insbesondere wenn von der Pressfläche (7) Erhebungen (2) vorstehen, zwecks Verschweißen auf einem Tragobjekt - die Restmutter an den Seitenflächen gehalten und/oder kontaktiert wird.

5. Verfahren nach einem der vorhergehenden Ansprüche, **dadurch gekennzeichnet, dass** das Verschweißen mittels Lichtbogen-Schweißen geschieht.

6. Verfahren nach einem der vorhergehenden Ansprüche, **dadurch gekennzeichnet, dass** Verschweißen mittels Reib-Schweißen geschieht.

7. Verfahren nach einem der vorhergehenden Ansprüche, **dadurch gekennzeichnet, dass** Verschweißen mittels Laser-Schweißen geschieht.

8. Verfahren nach einem der vorhergehenden Ansprüche, **dadurch gekennzeichnet, dass** die Herstellung des Hutes im Gussverfahren erfolgt.

9. Verfahren nach einem der vorhergehenden Ansprüche, **dadurch gekennzeichnet, dass** die Herstellung des Hutes im Kaltumformprozess, insbesondere Tiefziehprozess geschieht.

10. Verfahren nach Anspruch 8, **dadurch gekennzeichnet, dass** die stirnseitige Anlagefläche eines gegossenen Hutes vor dem Verschweißen mit dem Mutternkorpus spanend bearbeitet wird.

11. Verfahren nach einem der vorhergehenden Ansprüche, **dadurch gekennzeichnet, dass** die Stirnfläche (3) des Hutes vor dem Verschweißen mit dem Mutternkorpus nicht spanend bearbeitet wird.

12. Verfahren nach einem der vorhergehenden Ansprüche, **dadurch gekennzeichnet, dass** die Oberseite (6) der Restmutter nach der Herstellung der Muttemform mittels Kaltverformung nicht zusätzlich plan bearbeitet wird.

13. Hutmutter (1), bei der der metallische Hut (9) mit dem metallischen Korpus (11) der Hutmutter (1) verschweißt ist, wobei der Mutternkorpus (11) verformt ist als Sicherung gegen unbeabsichtigtes Lösen der aufgeschraubten Mutter, **dadurch gekennzeichnet, dass** der Muttemhut (9) am Mutternkorpus (11) so verschweißt ist, dass die Sicherungskraft der fertig gestellten Ganzmetall-Hutmutter gegen unbeabsichtigtes Lösen durch die definierte Eigenstabilität des aufgeschweißten Mutternhutes (9) gegen Verformung in Querrichtung die Sicherungskraft des verformten Mutternkorpus (11) erhöht wobei die Sollwandstärke des Hutes (1) 1 mm bis 3 mm +/- 0,10 mm beträgt.

14. Hutmutter (1) nach Anspruch 13, **dadurch gekennzeichnet, dass** bei einer quer zur Gewindelängsrichtung (10) zusammengedrückten Mutternkorpus (11) der Hut (9) nicht seitlich über die zusammengedrückten Außenflächen des Mutternkorpus (11) vorsteht.

15. Hutmutter (1) nach Anspruch 13 oder 14, **dadurch gekennzeichnet, dass** die Hutmutter (1) als eine Mutter mit unverlierbarer, drehbarer Unterlegscheibe (17) ausgebildet ist.

16. Hutmutter nach Anspruch 13 oder 14, **dadurch gekennzeichnet, dass** die Hutmutter (1) als eine Mutter mit von der Pressfläche (7) vorstehender Erhebung (4) zwecks Verschweißen auf einem Tragobjekt ausgebildet ist.

17. Hutmutter (1) nach einem der Ansprüche 13 bis 16, **dadurch gekennzeichnet, dass** der freie innere Durchmesser (15) des Hutes (9) größer ist als der Durchmesser (16) des Innengewindes des Mutternkorpus.

18. Hutmutter (1) nach einem der Ansprüche 13 bis 17, **dadurch gekennzeichnet, dass** Hut (9) und Mutternkorpus (11) auf dem gleichen Material bestehen.

## Claims

1. Method for producing a deformed all-metal nut as an all-metal cap nut (1), wherein
- firstly the nut body (11) without cap is produced in the manner of a conventional nut with a tapped through hole (12) including the deformation of this all-metal body (11), particularly by pressings (8, 8') transversely to the longitudinal direction of the thread (10) or in the longitudinal direction of the thread (10) on the upper side (6) of the body (11) facing away from the pressing surface (7), and
- separate production of the nut cap (9),
- attaching the nut cap (9) with its open side (5) to the upper side (6) of the body (11) and
- welding of the cap (9) and body (11) resulting in the cap nut (1), **characterised in that**
- the increase of the preload of the finished all-metal cap nut when screwing a round threaded bolt against the threaded bolt due to the stability of the nut cap (9) is considered by previously selecting a correspondingly lower deformation of the nut body (11) than during production of open nuts without cap, wherein the nominal wall thickness of the cap (1) is 1 mm to 3 mm +/- 0.10 mm.

2. Method according to claim 1, **characterised in that** during insertion of deformations on the upper side (6) of the body (11) the cap is pressed on the upper side (6) to such an extent that elevations (4) previously occurring on the upper side (6) are levelled and/or effect a counter-deformation on the face (3) of the cap.

3. Method according to one of the previous claims, **characterised in that** the nut body (11) is made without cap by pushing a washer (17) over the shaft part (13) of the body (11) and by positively, but rotatably connecting the shaft part (13) with the washer (17) before the nut cap is welded on.

4. Method according to one of the previous claims, **characterised in that** during welding of the cap to the residual nut - particularly when elevations (2) protrude from the pressing surface (7) for the purpose of welding on a supporting object - the residual nut is held and/or contacted at the side faces.

5. Method according to one of the previous claims, **characterised in that** the welding is carried out by means of arc welding.

6. Method according to the previous claims, **characterised in that** the welding is carried out by means of friction welding.

7. Method according to one of the previous claims, **characterised in that** the welding is carried out by means of laser welding.

8. Method according to one of the previous claims, **characterised in that** the cap is produced by means of a casting process.

9. Method according to one of the previous claims, **characterised in that** the production of the cap is carried out by means of a cold forming process, particularly a deep drawing process.

10. Method according to claim 8, **characterised in that** the frontal contact surface of a cast cap is machined before being welded to the nut body.

11. Method according to one of the previous claims, **characterised in that** the face (3) of the cap is not machined before being welded to the nut body.

12. Method according to one of the previous claims, **characterised in that** the upper side (6) of the residual nut is not additionally machined flat after production of the nut form by means of cold forming.

13. Cap nut (1), where the metallic cap (9) is welded to the metallic body (11) of the cap nut (1), wherein the nut body (11) is deformed as a protection against unintentional loosening of the screwed on nut, **characterised in that** the nut cap (9) is welded to the nut body (11) in a way that the securing force of the finished all-metal cap nut against unintentional loosening due to the defined inherent stability of the welded-on nut cap (9) against deformation in a transverse direction increases the securing force of the deformed nut body (11), wherein the nominal wall thickness of the cap (1) is 1 mm to 3 mm +/-0.10 mm.

14. Cap nut (1) according to claim 13, **characterised in that** with a nut body (11) compressed transversely to the longitudinal direction of the thread (10) the cap (9) does not protrude laterally over the compressed outer surfaces of the nut body (11).

15. Cap nut (1) according to claim 13 or 14, **characterised in that** the cap nut (1) is a nut with an undetachable, rotatable washer (17).

16. Cap nut according to claim 13 or 14, **characterised in that** the cap nut (1) is a nut with elevations (4) protruding from the pressing surface (7) for the purpose of welding on a supporting object.

17. Cap nut (1) according to one of claims 13 to 16, **characterised in that** the free inner diameter (15) of the cap (9) is larger than the diameter (16) of the inner thread of the nut body.

18. Cap nut (1) according to one of claims 13 to 17, **characterised in that** the cap (9) and the nut body (11) consist of the same material.

## Revendications

1. Procédé pour fabriquer un écrou déformé tout en métal, officiant d'écrou borgne (1) tout en métal, sachant que
- dans un premier temps le corps (11) d'écrou est fabriqué sans chapeau, comme un écrou conventionnel avec alésage (12) de passage taraudé, cette opération incluant la déformation de ce corps (11) tout en métal, en particulier par sertissages (8, 8') transversalement au sens longitudinal (10) du taraudage ou dans le sens longitudinal (10) du taraudage, sur le dessus (6) - ne regardant pas la surface de sertissage (7) - du corps (11), et
- la fabrication séparée du chapeau (9) de l'écrou,
- la pose du chapeau d'écrou (9) avec son côté ouvert (5) sur le dessus (6) du corps (11) et
- le soudage du chapeau (9) et du corps (11) pour donner un écrou borgne (1), **caractérisé en ce que**
- la hausse de précontrainte de l'écrou borgne tout en métal fini de fabriquer est prise en compte, au moment de visser un goujon fileté rond contre le goujon fileté, par la robustesse du chapeau (9) de l'écrou, vu que la déformation du corps d'écrou (11) est, de façon correspondante, préalablement choisie plus faible que lors de la fabrication d'écrous ouverts sans chapeau, sachant que l'épaisseur de consigne de la paroi du chapeau (1) est comprise entre 1 et 3 mm (+/- 0,10 mm).

2. Procédé selon la revendication 1, **caractérisé en ce qu'**en présence de déformations apportées à la partie supérieure (6) du corps (11), le chapeau subit lors du soudage une compression tellement forte au niveau de la partie supérieure (6) que les parties en bosse (4) qui étaient antérieurement présentes sur le dessus (6) sont égalisées et/ou provoquent une contre-déformation dans la surface frontale (3) du chapeau.

3. Procédé selon l'une des revendications précédentes, **caractérisé en ce que** le corps (11) de l'écrou est fabriqué sans chapeau, en insérant une rondelle (17) sur la queue (13) du corps (11), et que la queue (13) est reliée par adhérence de formes, mais toutefois en pouvant tourner, avec la rondelle (17) avant que l'écrou borgne soit soudé dessus.

4. Procédé selon l'une des revendications précédentes, **caractérisé en ce que** lors du soudage du chapeau avec le reste de l'écrou - en particulier lorsque des bosses (2) font saillie depuis la surface de sertissage (7), aux fins du soudage sur un objet support - le reste de l'écrou est retenu et/ou en contact contre les surfaces latérales.

5. Procédé selon l'une des revendications précédentes, **caractérisé en ce que** la soudure est obtenue par soudage à l'arc électrique.

6. Procédé selon l'une des revendications précédentes, **caractérisé en ce que** la soudure est obtenue par soudage frictionnel.

7. Procédé selon l'une des revendications précédentes, **caractérisé en ce que** la soudure est obtenue par soudage au laser.

8. Procédé selon l'une des revendications précédentes, **caractérisé en ce que** la fabrication du chapeau a lieu selon un procédé de coulée.

9. Procédé selon l'une des revendications précédentes, **caractérisé en ce que** la fabrication du chapeau a lieu selon un processus de déformation à froid, notamment d'emboutissage.

10. Procédé selon la revendication 8, **caractérisé en ce que** la surface d'applique côté frontal d'un chapeau moulé est usinée par enlèvement de copeaux avant le soudage avec le corps de l'écrou.

11. Procédé selon l'une des revendications précédentes, **caractérisé en ce que** la surface frontale (3) du chapeau est usinée sans enlèvement de copeaux avant le soudage avec le corps de l'écrou.

12. Procédé selon l'une des revendications précédentes, **caractérisé en ce que** la partie supérieure (6) de l'écrou restant n'est pas usinée plane en plus après l'obtention de la forme de l'écrou par déformation à froid.

13. Écrou borgne (1) sur lequel le chapeau (9) métallique est soudé contre le corps (11) métallique de l'écrou borgne (1), sachant que le corps de l'écrou (11) est déformé pour empêcher qu'il se détache involontairement de l'écrou vissé, **caractérisé en ce que** le chapeau (9) d'écrou est soudé contre le corps (11) de l'écrou de façon que la force empêchant un desserrage involontaire de l'écrou borgne fini tout en métal est accrue par la robustesse propre définie du chapeau (9) soudé sur l'écrou, robustesse qui empêche une déformation dans le sens transversal de la force de sécurisation du corps (11) d'écrou déformé, sachant que l'épaisseur de consigne de la paroi du chapeau (1) est comprise entre 1 et 3 mm +/- 0,10 mm.

14. Écrou borgne (1) selon la revendication 13, **caractérisé en ce que** sur un corps d'écrou (11) comprimé transversalement à la direction longitudinale (10) du taraudage, le chapeau (9) ne fait pas saillie latéralement au-dessus des surfaces extérieures comprimées du corps d'écrou (11).

15. Écrou borgne (1) selon la revendication 13 ou 14, **caractérisé en ce que** l'écrou à chapeau (1) est configuré en écrou équipé d'une rondelle (17) tournante imperdable.

16. Écrou borgne selon la revendication 13 ou 14, **caractérisé en ce que** l'écrou borgne (1) est configuré en écrou comportant une bosse (4) qui fait saillie de la surface de compression (7), afin de le souder sur un objet support.

17. Écrou borgne (1) selon l'une des revendications 13 à 16, **caractérisé en ce que** le diamètre intérieur libre (15) du chapeau (9) est plus grand que le diamètre (16) du taraudage dans le corps de l'écrou.

18. Écrou borgne (1) selon l'une des revendications 13 à 17, **caractérisé en ce que** le chapeau (9) et le corps (11) de l'écrou se composent du même matériau.
